# EUROPÄISCHE PATENTSCHRIFT

(11) **EP 0 674 784 B1**
(45) Veröffentlichungstag und Bekanntmachung des Hinweises auf die Patenterteilung: **20.08.1997**
(21) Anmeldenummer: 94902713.0
(22) Anmeldetag: 08.12.1993
(51) Int. Cl.: G06F 11/00

(54) **VERFAHREN ZUM TESTEN MINDESTENS EINER KLASSE EINES OBJEKTORIENTIERTEN PROGRAMMES AUF EINEM RECHNER**
PROCESS FOR TESTING AT LEAST ONE CLASS OF AN OBJECT-ORIENTED PROGRAM ON A COMPUTER
PROCEDE PERMETTANT DE TESTER AU MOINS UNE CLASSE D'UN PROGRAMME ORIENTE OBJET SUR UN ORDINATEUR

(30) Priorität: 17.12.1992 EP 92121511
(43) Veröffentlichungstag der Anmeldung: 04.10.1995
(73) Patentinhaber: SIEMENS AKTIENGESELLSCHAFT, 80333 München (DE)
(72) Erfinder: KOLB, Sebald, D-85521 Ottobrunn (DE)
(86) Internationale Anmeldenummer: EP9303450
(87) Internationale Veröffentlichungsnummer: WO9414117

(56) Entgegenhaltungen:
- WO-A-90/04829
- AUTOMATISIERUNGSTECHNISCHE PRAXIS - ATP Bd. 31, Nr. 1 , Januar 1989 , MUNCHEN DE Seiten 30 - 36 G. PAUTHNER ET AL. 'TBM, ein vollständig generierbares Software-Modultestbett'
- PROCEEDINGS OF THE CONFERENCE ON SOFTWARE MAINTENANCE-1988 27. Oktober 1988 , PHOENIX, ARIZONA Seiten 404 - 408 TOMAZ DOGSA ET AL. 'CAMOTE - Computer aided module testing and design environment'
- PROCEEDINGS OF THE 9TH DIGITAL AVIONICS SYSTEMS CONFERENCE 18. Oktober 1990 , VIRGINIA BEACH, VIRGINIA Seiten 107 - 110 GARY L. DEHLIN 'Automating Test Driver Generation'

## Beschreibung

Mit dem zunehmendem Umfang von Systemlösungen im Rahmen von industriellen Großprojekten, wächst auch der Beitrag den die Software zur Lösung liefert. Damit man große Softwareprojekte effizient abwickeln kann, hat es sich als vorteilhaft erwiesen, diese Projekte in Teilprojekte zu unterteilen und einzelne Programme modular zu erstellen. Ein nicht unwesentlicher Aspekt bei der modularen Erstellung von Programmen ist auch, daß einzelne Programmoduln von anderen Projekten leicht wieder verwertet werden konnen. In den vergangenen Jahren hat sich in diesem Zusammenhang besonders die Technik des objektorientierten Programmierens als vorteilhaft erwiesen.

Im Zusammenhang mit der Wiederverwertbarkeit einzelner Programmoduln, kommt besonders der Qualitatssicherung dieser Programmoduln eine erhöhte Bedeutung zu. Den Anforderungen einer besonders fehlerfreien Qualitat einzelner Programmstrukturen wird durch besonders entwickelte Testverfahren Rechnung getragen. Ein wesentliches Anliegen des Softwaretestens ist es, die Qualitat der Software im Rahmen der Testabdeckung nachzuweisen. Um den Tester bei seiner Arbeit zu unterstützen, sind unterschiedlichste Testverfahren denkbar. Man will mit diesen Testverfahren einen durchgehenden Test der Software von einzelnen Programmoduln bis zum kompletten System ermöglichen. Insbesondere unterscheidet man dabei drei aufeinander aufbauende Tests: den Komponententest, den Integrationstest und den Systemtest. Der Komponententest hat das Ziel, Fehler in einzelnen Progammkomponenten zu finden. Bei den Komponenten handelt es sich herkömmlicherweise um ein oder mehrere Moduln, beispielsweise in der objektorientierten Programmierung um Klassen. Der Komponententest wird durch den Integrationstest, mit dessen Hilfe Fehler an den Schnittstellen und in der Kommunikation zwischen den getesteten Komponenten entdeckt werden, ergänzt. Zum Abschluß kann ein Systemtest durchgeführt werden, welcher einen Test aus Kundensicht darstellt (z.B. der Test einer kompletten vermittlungstechnischen Anlage). Er hat das Ziel die Stabilitat des gesamten (Programm-)Systems unter "Last", d.h. realen bis extremen Bedingungen, zu testen.

Im Rahmen der Technik des objektorientierten Programmierens wird der Komponententest durch ein Testverfahren für Klassen bereitgestellt. Sinnvollerweise beginnt man mit dem Testen bei einzelnen Programmkomponenten, d.h. den Klassen. Setzt man beim Test eines Programmes auf nicht ausgetestete Klassen auf, so werden Fehler, die bei der Klassenimplementierung gemacht wurden, nicht oder nur sehr viel schwerer gefunden und entsprechend schwer behoben. Der Grund dafür liegt neben der schlechten Überschaubarkeit des gesamten Programmes in der Vermischung dieser funktionalen Fehler, mit denen, die beim Zusammenspiel der einzelnen Objekte auftreten (Komunikations-bzw. Schnittstellenfehlern). Ein weiterer wesentlicher Grund für gut ausgetestete Klassen ist die daraus resultierende gesteigerte Bereitschaft, diese Klassen wieder zu verwenden. Qualitativ schlechte Software eignet sich offensichtlich nicht zur Wiederverwendung.

Klassen sind als Testlinge in der Regel für sich alleine nicht ablauffähig und damit ohne zusätzlichen Aufwand auch nicht mit einem Debugger eines Betriebssystems zu debuggen. Da diese Testlingsklassen nur Programmstrukturen darstellen, ist es zwingend erforderlich, für ihren Test Objekte aus ihnen abzuleiten. Sie werden dann getestet, indem bei den Objekten entsprechende Methoden aufgerufen und ausgeführt werden. Die Parameter eines Methodenaufrufs zusammen mit den Werten der Datenkomponenten eines aufzurufenden Objektes stellen dann die Testdaten dar.

Die Technik des objektorientierten Programmierens ist vergleichsweise jung. Es gibt deshalb keine technischen Verfahren zum Testen von Klassen objektorientierter Software. Würde ein Programmierer auf herkömmliche Weise eine Klasse testen wollen, so müßte er zunächst einen Testfall generieren, d.h. ein Programm schreiben, welches aus einer Klasse ein Objekt instanziert. Weiterhin müßte er im Vorfeld des Tests Methodenaufrufe inklusive Parameterwerte für dieses Objekt in dieses Programm einarbeiten, welche möglichst genau auf die Fehler, die er zu finden hofft, abgestimmt wären. Anschließend würde er dieses Programm übersetzen und binden müssen. Nach dem Testlauf würde dann eine Auswertung erfolgen. Falls der Test keine Aussage über die Funktionsfähigkeit dieser Klasse zuließe, müßte er den gesamten Vorgang erneut durchführen.

Aus der internationalen Veröffentlichung WO-9004829 ist ein Programmierwerkzeug bekannt, welches objektorientierte Elemente enthält. Weiterhin besitzt dieses Tool einen Kommandointerpreter als Bestandteil eines Debuggers, mit dem verschiedene Prozeduren aufgerufen werden können. Dort werden jedoch keine Klassen getestet und auch die speziellen Probleme, die beim Testen von objektorientierten Programmen auftreten werden nicht angesprochen.

Aus dem Artikel: TBM, _{ʺ}Ein vollständig generierbares Software-Testbett˝ in Automatisierungstechnik ATP, BD.31, Nr. 1, Januar 1989, Seite 30 bis 36; G. Pauthner et al. ist die Generierung eines Testbetts zum Testen von Softwarekomponenten bekannt. Bei den dort beschriebenen Verfahren werden bei einer Änderung des Testablaufs immer nur die geänderten Module neu übersetzt und gebunden. Auch dort werden die speziell bei objektorientierten Programmen auftretenden Testprobleme nicht angesprochen. Ein weiterer Stand der Technik hierzu ist nicht bekannt.

Die der Erfindung zugrundeliegende Aufgabe besteht darin, ein interaktives Verfahren zum Testen mindestens einer Klasse eines objektorientierten Programmes auf einem Rechner anzugeben.

Diese Aufgabe wird gemäß den Merkmalen des Patentanspruchs 1 gelöst.

Alle übrigen Weiterbildungen der Erfindung ergeben sich aus den Unteransprüchen.

Besonders vorteilhaft an dem angegebenen Verfahren ist die Tatsache, daß Klassen zeitlich vor und unabhängig von ihrer eigentlichen Anwendung in objektorientierten Programmen getestet werden können.

Besonders vorteilhaft an der Anwendung des erfindungsgemäßen Verfahrens ist die Tatsache, daß bereits im Vorfeld des Tests alle für den Test maßgeblichen Kenngrößen erfaßt werden und daß das Testprogramm nur einmal übersetzt und gebunden werden muß.

Um das Zusammenspiel auch mehrerer Klassen sinnvoll testen zu können, ist im erfindungsgemaßen Verfahren günstigerweise vorgesehen, die Methodeninformation aller am Test beteiligten Klassen für die in der externen Methodenschnittstelle der beteiligten Klassen definierten Methoden zu gewinnen.

Besonders vorteilhaft ist am erfindungsgemäßen Verfahren, daß es im Vorfeld eine Speicherzuweisung für die Objektinitialisierung oder Methodenaufrufe vorsieht.

Eine günstige Form der Speicherzuweisung geschieht beispielsweise über Pointer, die dann während des Testbetriebs umdefiniert werden können.

Weiterhin ist es günstig, daß das erfindungsgemäße Verfahren einen Zugriff auf objektinterne Datenkomponenten vorsieht, da diese normalerweise für einen Tester wegen des, beim objektorientierten Programmieren üblichen, Data Hidings nicht zugänglich sind.

Weiterhin ist es beim angegebenen Verfahren günstig, daß ein Debugger angeschlossen ist, sodaß beim Test entdeckte Fehler sofort mit zusätzlicher Zuhilfenahme des Debuggers analysiert und lokalisiert werden können.

Um die Funktionsweise einer Klasse möglichst vollständig Testen zu können, sieht das erfindungsgemäße Verfahren sinnvollerweise auch eine Gewinnung der Methodeninformation für generische und vererbende Klassen vor.

Im folgenden wird die Erfindung anhand von Figuren und Beispielen weiter erläutert.

Figur 1 zeigt ein Ausführungsbeispiel eines erfindungsgemaßen Verfahrens. Dieses Ausführungsbeispiel kann sich beispielsweise auf eine Vermittlungseinrichtung beziehen. Die Programmiersprache, in der der Rechner programmiert wird, sei beispielsweise Object CHILL.

Figur 2 zeigt als Beispiel ein Programmlisting

Figur 3 zeigt ein Blockdiagramm eines erfindungsgemaßen Verfahrens

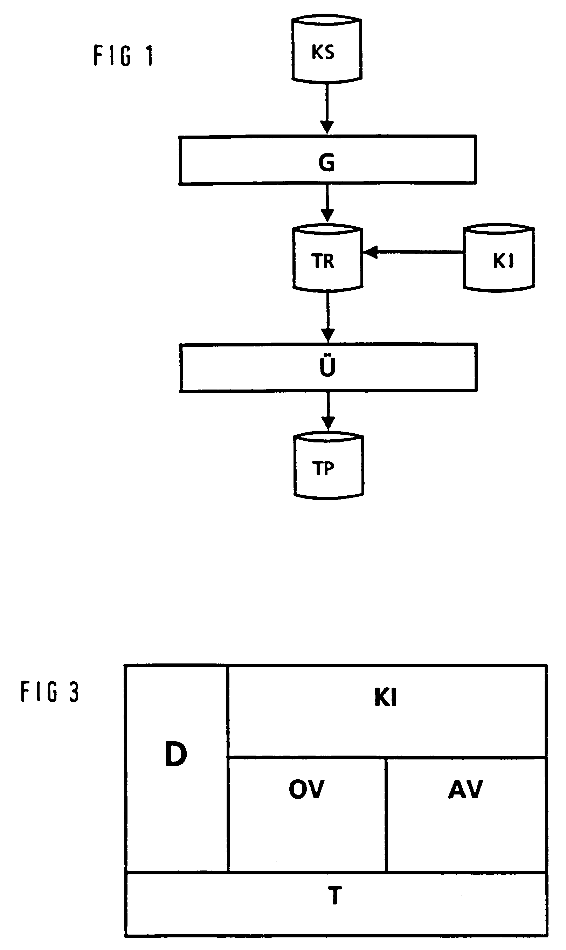

Wie in Figur 1 dargestellt, wird beispielsweise aus einer Klassenspezifikation KS mit Hilfe eines Generators G Methodeninformation gewonnen und diese Methodeninformation dazu benutzt, Variablenspeicher für die entsprechenden Parameter der Methodenaufrufe und die Objekte der Testlingsklassen selbst in Form eines Testrahmens TR bereitzustellen. Anschließend wird mit Hilfe eines Übersetzers Ü der Testrahmen TR zusammen mit einem Kommandointerpreter KI übersetzt, wodurch ein fertiges Testprogramm TP entsteht. Dieser Kommandointerpreter KI ist beispielsweise für eine Testkommandosprache (die Befehlssyntax ist weiter hinten in der Beschreibung unter "Eingaben" erläutert) entworfen. So kann der Testende einfach Testszenarien erstellen. Beispielsweise kann der Kommandointerpreter folgende Befehle zulassen:

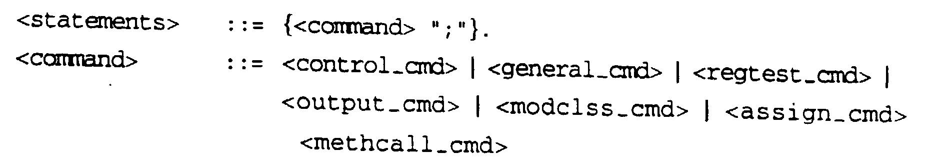

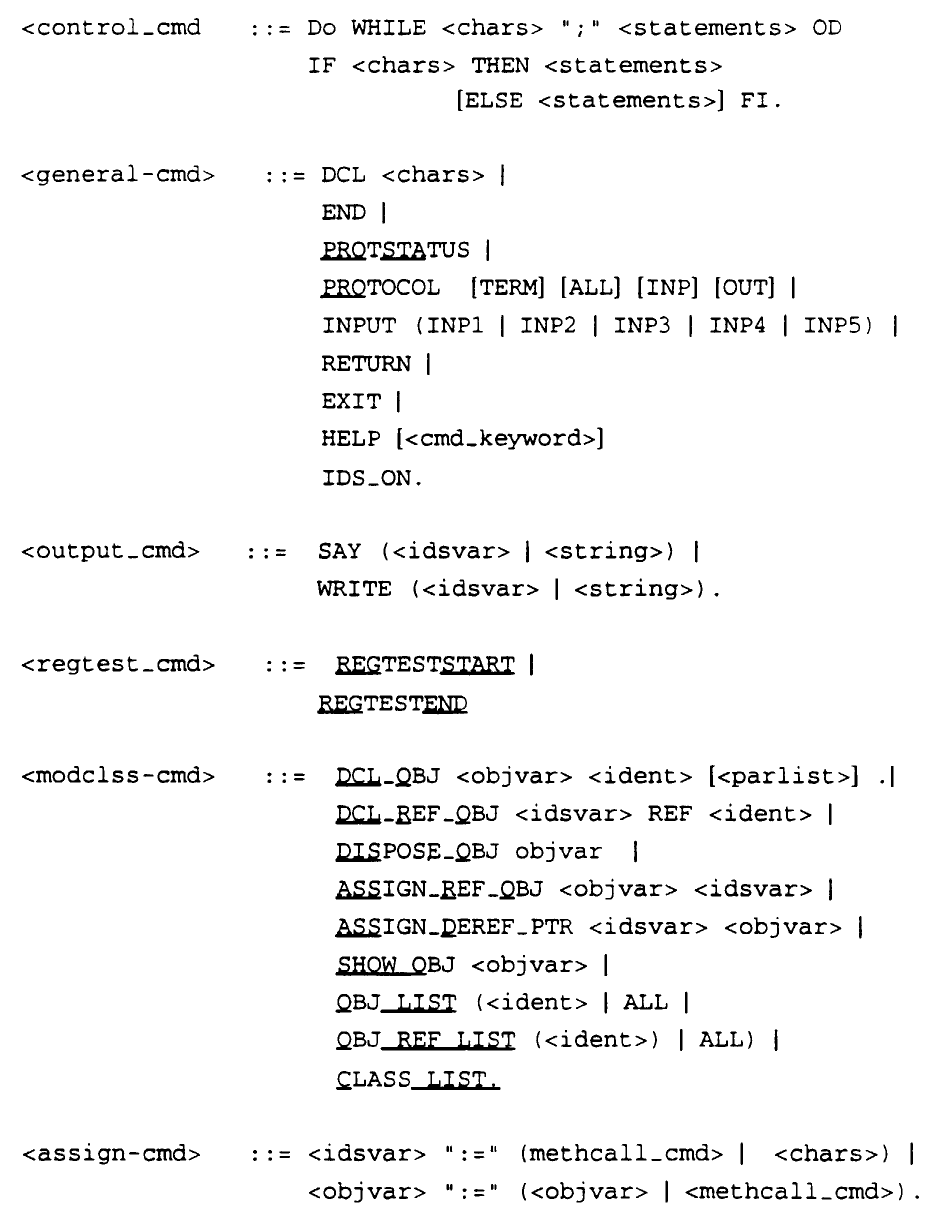

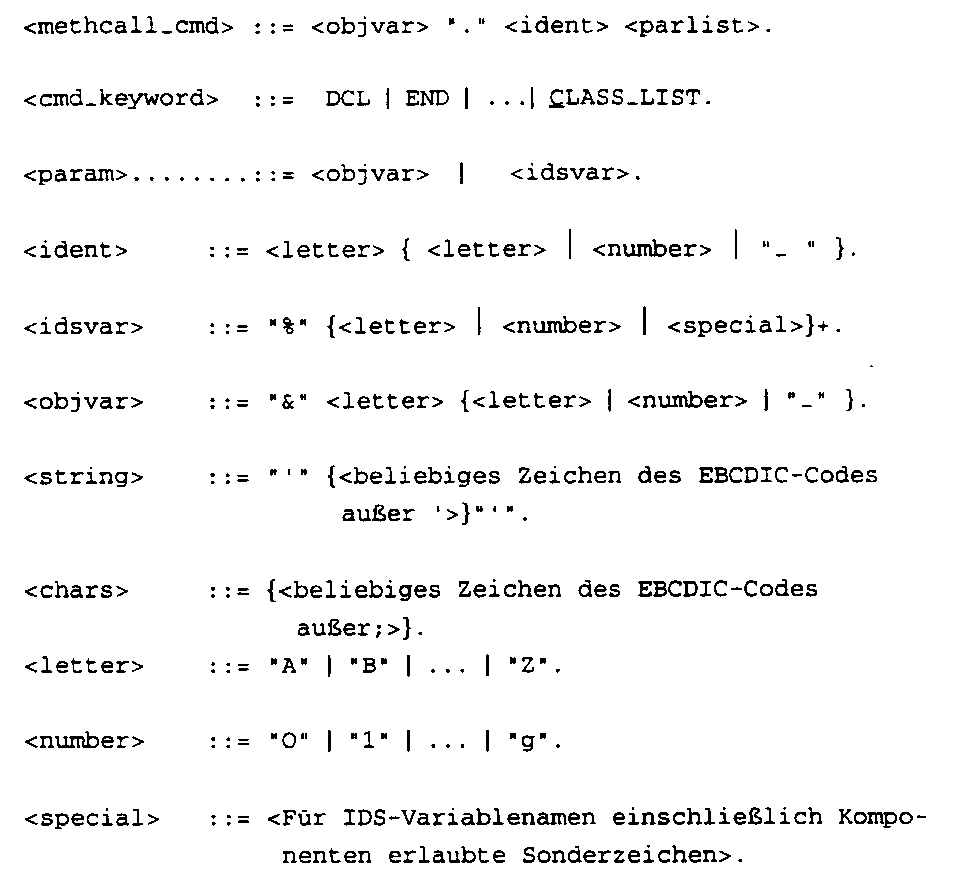

Beispielsweise werden im erfindungsgemäßen Verfahren zwei Arten von Variablen unterschieden. Zum einen die reinen IDS-Variablen (IDS: Interaktives Debugging System), die wie gewohnt deklariert und benutzt werden können, und zum anderen Objekte, die als Instanzen von Testlings- oder Parameterklassen über das Kommando DCL_OBJ deklariert werden.

Beispielsweise Variable aus mitgebundenen Moduln konnen über IDS und in Bool'schen Bedingungen von Schleifen und Verzweigungen oder auf der rechten Seite von Zuweisungen mit IDS verwendet werden. Die Verbindung zwischen den mit DCL_OBJ vereinbarten Objekten mit IDS wird durch IDS-Pointer beispielsweise vom Mode "REF Testingsklasse"(mit DCL_REF_OBJ zu vereinbaren) und den zwei Kommandos ASSIGN_REF_OBJ und ASSIGN_DEREF-PTR hergestellt. Beispielsweise werden Operatoren der Testsystem Kommandosprache auf IDS-Operatoren abgebildet.

Im erfindungsgemaßen Verfahren können beispielsweise folgende Befehle zu Objektbearbeitung vorgesehen sein, die vom Testenden interaktiv eingegeben werden und die eine hohe Flexibilität beim Test gewährleisten.Die Testeingaben durch den Testenden und die von ihm getätigten Aufrufe werden sinnvollerweise gesondert verwaltet. Beispielsweise ist eine Objektverwaltung vorgesehen, um die Zuweisung von Testobjekten in der Kommandosprache zu Rechner-Objekten sicherzustellen. Weiterhin kann auch vorteilhaft eine Aufrufbearbeitung vorgesehen sein, welche die Konsistenz von Test-Methodenaufrufen mit hardwareseitig ablaufenden Programmen sicherstellt. Es ist dazu nicht erforderlich, das Testprogramm neu zu generieren.

### Kommandos zur Objektbearbeitung

### Vereinbarung eines Objekts einer MODULE-Klasse

### DCL OBJ Objektname Klassenname "("Parameterliste")"

Mit diesem Kommando wird ein Objekt auf Ebene der Kommandosprache bereitgestellt. Die Parameterliste gibt die Parameter für den Konstruktoraufruf an. Sie kann entfallen, dann wird der Standardkonstruktor aufgerufen. Ansonsten gelten für sie die gleichen Regeln wie beim Methodenaufruf.
Der Objektname muß aus dem Zeichen & gefolgt von einem Großbuchstaben und dann höchstens noch 29 Großbuchstaben, Ziffern oder Unterstrichen bestehen, ansonsten wird die Fehlermeldung "ILLEGAL OBJECTNAME" ausgegeben. Die Klasse muß bei der Erzeugung des Testrahmens mit berücksichtigt worden sein, ansonsten wird die Fehlermeldung "UNKNOWN CLASS" ausgegeben. Falls schon ein Objekt mit dem angegebenen Namen vereinbart wurde, wird die Fehlermeldung "OBJECT ALREADY DECLARED" ausgegeben. Der Kommandoname DCL_OBJ wurde zur Unterscheidung vom IDS-Kommando DCL gewählt.

### Vereinbarung eines Pointers auf Objekte

### DCL REF OBJ Pointername REF Klassenname

Der vereinbarte Pointer ist eine IDS-Variable, von deren Existenz die Objektverwaltung Kenntnis hat. Die Regeln von IDS sind einzuhalten.
Der Pointermode auf Klassen, von denen Objekte vereinbart werden konnen, wird im Testsystem intern deklariert. Beim Löschen von Objekten mit dem DISPOSE_OBJ_Kommando wird geprüft, ob noch mit DCL-REF_OBJ für die Klasse des zu löschenden Objekts vereinbarte Pointer auf dieses zeigen (vgl. DISPOSE_OBJ_Kommando).

### Löschen eines Objekte einer MODULE-Klasse

### DISPOSE OBJ Objektname

Mit diesem Kommando wird ein zuvor mit DCL_OBJ instantiiertes Objekt wieder gelöscht. Das Objekt muß zuvor erzeugt worden sein, sonst liegt ein Fehlerfall vor, der mit "OBJECT UNDEFINED" gemeldet wird. Falls noch mit DCL_REF_OBJ für die Klasse des zu löschenden Objekts vereinbarte Pointer auf das Objekt zeigen, wird das Kommando nicht ausgeführt und die Fehlermeldung "OBJECT YET REFERENCED BY POINTER" ausgegeben. Es wird aber nicht geprüft, ob noch andere als mit DCL_REF_OBJ vereinbarte Pointer auf das Objekt existieren.

### Übergabe der Adresse eines Objekts

### ASSIGN_REF_OBJ Objektname IDS-Variable

Das Kommando schreibt die Adresse des angegebenen Objekts in die IDS-Variable. Diese muß mit DCL_REF_OBJ als Pointer auf die Klasse des angegebenen Objekts vereinbart worden sein, sonst wird die Fehlermeldung "UNKNOWN IDS-POINTER" ausgegeben. (Kein Polymorphismus für die mit DCL_REF_OBJ Pointer!). Das Objekt muß zuvor mit DCL_OBJ erzeugt worden sein, sonst wird die Fehlermeldung "UNKNOWN OBJECT" ausgegeben.

Nach dem Kommando zeigt die IDS-Variable auf das Objekt. Durch dieses Kommando wird für den Tester die Verbindung zwischen IDS und den Objekten der Kommandosprache hergestellt.

### Übergabe der Daten eines dereferenzierten Pointers

### ASSIGN_DEREF_PTR IDS-Variable Objektname

Das Kommando kopiert die Daten des Objekts, auf das der Pointer zeigt, in das angegebene Objekt. Durch dieses Kommando wird für den Tester die Verbindung zwischen IDS und den Objekten der Kommmandosprache hergestellt.
Die IDS-Variable muß mit DCL_REF_OBJ als Pointer auf die Klasse des angegebenen Objekts vereinbart worden sein, sonst wird die Fehlermeldung "UNKNOWN IDS-POINTER" ausgegeben. (Kein Polymorphismus für die mit DCL_REF_OBJ vereinbarten!). Die IDS-Variable muß auch tatsächlich auf ein Objekt dieser Klasse zeigen. Dies kann vom Testsystem nicht überprüft werden! Das angegebene Objekt muß zuvor mit DCL-OBJ erzeugt worden sein, sonst wird die Fehlermeldung "UNKNOWN OBJECT" ausgegeben.

### Ausgabe der Daten eines Objekts

### SHOW OBJ Objektname

Das Kommando veranlaßt die Ausgabe der Datenattribute des angegebenen Objekts in die Protokolldaten ALL, OUT und auf Terminal, falls sie aktiviert sind (dazu Kommando PROTSTATUS). Es wird mit dem IDS-Kommando DISPLAY realisiert . Das Objekt muß zuvor mit DCL_OBJ erzeugt worden sein, ansonsten wird die Fehlermeldung "UNKNOWN OBJECT" ausgegeben.

Eine weitere Möglichkeit, Objektdaten auszugeben, ist das Anzeigen dereferenziert IDS-Pointer, die auf das Objekt zeigen, mittels der Kommandos SAY und WRITE.

### Aufruf gewöhnlicher Methoden

### Objektname.Methodenname "("Parameterliste")"

Bei dem angegebenen Objekt wird die Methode mit den Parametern der Parameterliste aufgerufen. Es muß zuvor mmit DCL-OBJ erzeugt worden sein. Als Parameter sind nur IDS-Variablen oder Objekte (die zuvor in der Kommandosprache vereinbart wurden) zugelassen. Bei fehlerhaften Modes wird die Fehlermeldung "PARAMETERMODES DO NOT FIT TO METHODNAME" ausgegeben. Wegen möglichen Overloadings in den Methoden der Testlingsklasse kann der Mode-Fehler im allgemeinen nicht genauer lokalisiert werden. Die Parameter sind durch Kommata zu trennen, derart, daß zwischen zwei direkt aufeinanderfolgenden Parametern je genau ein Komma steht. od

### Aufruf einer Methode mit Ergebnis

### Variable : = Objektname.Methodenname "("Parameterliste")"

Es gelten die gleichen Regeln wie beim Aufruf gewöhnlicher Methoden (s.o.).

Die Variable, der das Ergebnis zugewiesen wird, muß eine IDS-Variable oder ein zuvor mit DCL_OBJ vereinbartes Objekt passenden Modes sein, sonst wird eine Fehlermeldung ausgegeben.

### Zuweisung mit Objekten

### Obj1 := Obj2

Den Datenkomponenten von Obj1 werden die entsprechenden Werte von Obj2 zugewiesen. Die beiden Objekte müssen zuvor mit DCL_OBJ vereinbart worden und von der selben Klasse sein, sonst wird die Fehlermeldung "UNKNOWN OBJECT Objektname" bzw. "MODE-MISSMATCH" ausgegeben.

### Information über Objekte

### OBJ_LIST_Klassenname

Dieses Kommando veranlaßt die Ausgabe der Namen aller Objekte, die aktuell für die angegebene Klasse vereinbart sind. Statt Klassenname kann auch ALL angegeben werden, worauf zu sämtlichen Klassen, für die eine Objektverwaltung existiert, die Objektnamen ausgegeben werden. Falls für die Klasse mit dem angegebenen Namen keine Objektverwaltung generiert wurde, wird die Fehlermeldung "UNKNOWN CLASS" ausgegeben.

### Information über Objektpointer

### OBJ_REF_LIST Klassenname

Dieses Kommando veranlaßt die Ausgabe aller Pointernamen, die aktuell zur angegebenen Klasse mit dem Kommando DCL_REF_OBJ vereinbart sind. Statt Klassennamen kann auch ALL angegeben werden, worauf sämtliche mit DCL REF OBJ vereinbarten Objektpointernamen ausgegeben werden. Falls für die Klasse mit dem angegebenen Namen keine Objektverwaltung generiert wurde, wird die Fehlermeldung "UNKNOWN CLASS" ausgegeben.

### Information über Klassen

### CLASS LIST

Dieses Kommando veranlaßt die Ausgabe aller Klassennamen, für die eine Objektverwaltung generiert wurde.

Die hier gemachten Ausführungen sind nur als Beispiel für eine Ausführungsform des erfindungsgemäßen Verfahrens aufzufassen und berücksichtigen die spezielle Namensgebung von Object-CHILL. Sie sind auf andere objektorientierte Programmiersprachen wie zum Beispiel C++, Eiffel, SIMULA oder Smalltalk direkt übertragbar. Es kann beispielsweise ohne Beschränkung der Allgemeinheit auch vorgesehen sein, andere Kommandos für einen Testkommando-Interpreter vorzusehen. Besonders wichtig ist, daß nur einmal ein Testprogramm übersetzt werden muß und daß der Tester durch das erfindungsgemäße Verfahren die Möglichkeit erhält, sämtliche für die Klassentests erforderliche Testfunktionen interaktiv auszulösen. Interaktiv kann in diesem Zusammenhang auch bedeuten, daß er Testkommandodateien generiert und diese startet und mit entsprechenden Abbruchkriterien versieht.

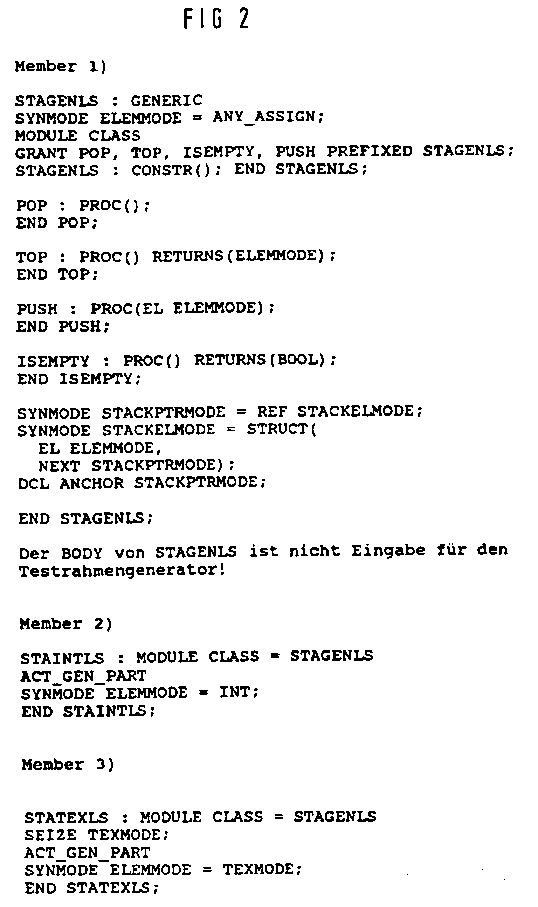

In Figur 2 ist ein Testbeispiel des erfindunsgemäßen Verfahrens als Programmlisting aufgeführt. Es enthält die Klassenvereinbarung und die entsprechenden Kommandos für den Testinterpreter.
In diesem Beispiel wird die generische Klasse STAGENLS über ihre zwei Ausprägungen STAINTLS und STATEXLS getestet.

Für den Generator G dient eine Datei als Eingabe, die drei Klassenspezifikationen Member 1), 2) und 3) wie gezeigt als Inhalt hat (die Reihenfolge der Members in der Datei ist unerheblich!).

Die Klasse STATEXLS importiert aus einem CHILL-Modul TEXMODE. Der exportierende Modul ist keine Eingabe für den Generatorlauf.

Bei diesem Beispiel werden zwei Objektverwaltungsklassen OMCL001S und OMCL002S und zwei Aufrufbearbeitungsklassen MCCL001S und MCCL002S generiert, weil nur zwei Klassen auftreten, von denen Objekte instantiiert und dort Methoden aufgerufen werden konnen, nämlich STAINTLS und STATEXLS. Bei der oben angegebenen Reihenfolge der Memberdateien gehören die Klassen ... 001S zu STAINTLS und die ... 002S zu STATEXLS.

Figur 3 zeigt anhand eines Blockdiagrammes das Zusammenwirken verschiedener Komponenten, bei der Durchführung eines beispielhaft ausgebildeten erfindungsgemäßen Verfahrens.

An oberster Stelle befindet sich hier der Kommandointerpreter KI, welcher Eingaben einer Testperson interpretiert.
Die Objektverwaltung OV und die Aufrufverwaltung AV stellen die Konsistenz von Testlingen T mit dem Testszenario eines Testenden sicher. Dies geschieht, indem sie beispielsweise Speicherbereiche im Rechner über Pointer zuweisen, oder diesen Speichebereichen Namen zuordnen. So gewährleisten sie den sicheren Ablauf der auszuführenden Methoden.

### 4 EINGABEN

### 4.1 Die Kommandosprache des Testsystems

### 4.1.1 Allgemeine Konventionen

Die Kommandosprache des Testsystems ist an CHILL und an IDS angelehnt. Dies bedeutet insbesondere, daß
- der gleiche Zeichensatz verwendet wird, d.h. für Schlüsselwörter und Bezeichner nur Großbuchstaben zulässig sind,
- alle Kommandos durch ein Semikolon abgeschlossen werden,
- Kommentare wie Leerzeichen (Blanks) behandelt werden,
- Blanks zwischen Schlüsselwörtern oder Bezeichnern angegeben werden mussen, während sie zwischen Operatoren wegbleiben können.

Zusätzlich werden folgende Festlegungen getroffen:
- Zeilentrenner werden wie Blanks behandelt, d.h. bei einem mehrzeiligen Kommando wird nach dem 80. Zeichen (entspricht einer MVS-Zeile) ein Blank eingefügt. Somit endet ein Wort spätestens am Zeilenende.
- Die im folgenden aufgeführten Längen verstehen sich als Maximalwerte.
   Bezeichner sind maximal 31 Zeichen lang.
   Strings können eine Zeile (80 Zeichen) lang sein, wenn sie mit den Kommandos SAY bzw. WRITE ausgegeben werden.
   Boolesche Bedingungen in Schleifen und Verzweigungen, Ausdrücke und Variablendeklarationen dürfen 190 Zeichen nicht überschreiten, da diese mit Hilfe von IDS ausgewertet bzw. deklariert werden.
- Erfolgreich eingegebene Kommandos werden nicht explizit quittiert, sondern es wird die Eingabe des nächsten Kommandos erwartet. Ausnahmen hierzu bilden lediglich die Kommandos END, REGTESTSTART und REGTESTEND.
- Fehlerhafte Kommandos werden durch entsprechende Meldungen angezeigt, wobei implizite Fehlerkorrekturen nicht durchgeführt werden. Nach einem fehlerhaften Kommando erwartet der Interpreter das nächste Kommando im Terminalmodus, d.h. Kommandodateien werden unmittelbar nach einem Fehler verlassen. Tritt der Fehler in Kontrollstrukturen auf, werden diese genau wie das Kommando abgebrochen. Weitere Kommandos in der gleichen Zeile werden ignoriert. Fehlerhafte Kommandos während des Regressionstestes führen zum Abbruch des Regressionstests. (vgl. Kapitel 6)

### 4.1.2 Zur Beschreibung der Kommandosprache

Die Beschreibung der Kommandos ist an die erweiterte Backus-Naur-Form (EBNF) angelehnt, dabei gelten folgende Regeln:
- Schlüsselwörter der Kommandosprache werden in Großbuchstaben geschrieben.
- Alternativen werden durch '|' dargestellt, z.B:
   Com hat folgende Form: FORM1 | FORM2 , d.h. das Kommando Com kann in der Form FORM1 oder FORM2 eingegeben werden.
- Teile, die weggelassen werden können, werden in '[' und ']' geklammert.
   Z.B.: Com hat folgende Form: TEIL1 [ TEIL2] , d.h. das Kommando Com kann in der Form TEIL1 oder TEIL1 TEIL2 dargestellt werden.
- Zusammengehörige Teile werden in '(' und ')' geklammert. Z.B.: Com hat folgende Form: (TEIL1 | TEIL2) TEIL3, d.h. das Kommando Com kann in der Form TEIL1 TEIL3 oder TEIL2 TEIL3 dargestellt werden.
- Bei Kommandos oder Kommandoparametern, die abgekürzt werden können, ist die Abkürzung der unterstrichene Teil des Namens. Z.B. kann KURZFORM durch KURF abgekürzt werden.

### 4.1.3 Die Syntax im Überblick

Die Syntax der Kommandosprache ist ebenso wie die einzelnene Kommandos in den folgenden Kapiteln mittels EBNF beschrieben. Zusätzlich werden folgende Festlegungen getroffen:
- Non-Terminal-Symbole, die dazu dienen, die Grammatik strukturiert gliedern zu können, werden in spitze Klammern ('<' und '>') gefaßt.
- Terminal-Symbole sind Symbole, die zur TeS-Kommandosprache gehören. Die Schlüsselwörter werden groß geschrieben und sonstige Symbole in Anführungszeichen (z.B. ":=") eingeschlossen.
- Die links vom Metazeichen '::=' stehenden Non-Terminal-Symbole können durch die rechte Seite ersetzt werden. Die Grammatik ist kontextfrei, d.h. auf der linken Seite stehen keine zusätzlichen Terminal-Symbole.
- Symbole, die beliebig oft (auch 0-mal) wiederholt werden dürfen, werden in '(' und ')' geklammert. Folgt der schließenden Klammer ein '+', so bedeuted dies, daß das Symbol mindestens einmal wiederholt werden muß. Folgt eine Zahl x, so muß der geklammerte Teil genau x-mal wiederholt werden.
- Das Metasymbol '.' zeigt das Ende einer Regel an.
- Anstelle des Non-Terminal-Symbols <chars> wird eine beliebige Zeichenfolge erwartet, die zur Auswertung an IDS übergeben wird. Diese Zeichenfolge wird vom Testsystem nicht syntaktisch analysiert.

### Grammatik der Kommandosprache für den MODULE-Klassen-Test:

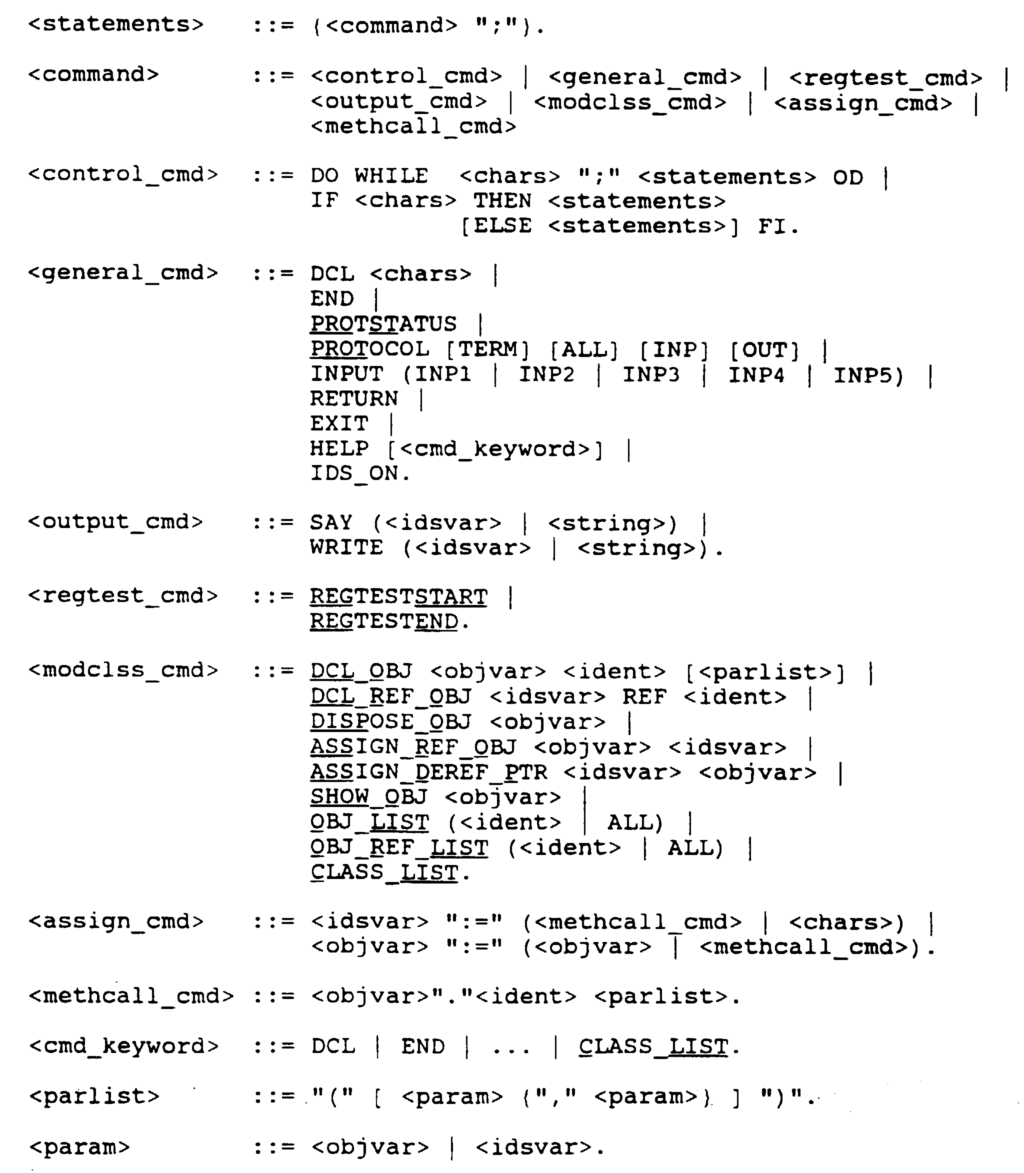

## Patentansprüche

1. Verfahren zum Testen mindestens einer Klasse eines objektorientierten Programmes auf einem Rechner,
a) bei dem aus mindestens einer Klassenspezifikation eine Methodeninformation über alle in der Klasse erlaubten Methoden und deren zugehörige Aufrufparameter gewonnen wird,
b) bei dem aus der Methodeninformation ein Testrahmen in Form eines Variablenspeichers erzeugt wird, welcher Objekte dynamisch anzulegen ermöglicht und/oder Objekte statisch enthält, sowie deren Methoden mit den Aufrufparametern aufzurufen ermöglicht,
c) bei dem ein Testprogramm erzeugt wird, das als einen Bestandteil einen Kommandointerpreter enthält, welcher von einem Testende eingegebene Testkommandos interpretiert, und das als einen weiteren Bestandteil den unter b) erzeugten Testrahmen enthält, indem, es lediglich einmal übersetzt und gebunden wird,
d) und bei dem das Testprogramm zum Testen der Klasse verwendet wird, indem eingegebene Testkommandos vom darin enthaltenen Kommandointerpreter interpretiert werden, so daß unterschiedliche Testszenarien kein erneutes Übersetzen und Binden erfordern.

2. Verfahren nach Anspruch 1, bei dem die Methodeninformation zumindest für alle über eine externe Methodenschnittstelle exportierten Methoden, jeder einzelnen von gemeinsam zu testenden Klassen gewonnen wird.

3. Verfahren nach einem der Ansprüche 1 oder 2, bei dem der Testrahmen einen Variablenspeicher enthält und/oder benutzt.

4. Verfahren nach Anspruch 3, bei dem auf den Variablenspeicher über Pointer zugegriffen wird.

5. Verfahren nach Anspruch 1, bei dem der Kommandointerpreter mindestens einen auf dem Rechner vorhandenen Debugger benutzt.

## Claims

1. Method for testing at least one class of object-oriented program on a computer,
a) in which method information about all the methods allowed in the class and about all their associated calling parameters is obtained from at least one class specification,
b) in which a test frame in the form of a variable store is produced from the method information, which variable store makes it possible to apply objects dynamically and/or contains objects in the steady state, and which makes it possible to call its methods using the calling parameters,
c) in which a test program is produced which contains a command interpreter as one component, which command interpreter interprets test commands entered by a test end and which contains, as a further component, the test frame produced in b), in that it is translated and linked only once,
d) and in which the test program is used to test the class, in that entered test commands are interpreted by the command interpreter contained in it, such that different test scenarios do not require repeated translation and linking.

2. Method according to Claim 1, in which the method information for each individual class of classes which are to be tested jointly is obtained at least for all the methods exported via an external method interface.

3. Method according to one of Claims 1 or 2, in which the test frame contains and/or uses a variable store.

4. Method according to Claim 3, in which a pointer is used to access the variable store.

5. Method according to Claim 1, in which the command interpreter uses at least one debugger which is available on the computer.

## Revendications

1. Procédé pour tester au moins une classe d'un programme orienté objet sur un ordinateur,
a) dans lequel, à partir d'au moins une spécification de classe, une information de méthodes est obtenue sur toutes les méthodes autorisées dans la classe et leurs paramètres d'appel correspondants,
b) dans lequel, à partir de l'information de méthodes, un cadre de test est généré sous la forme d'une mémoire de variable qui permet de créer dynamiquement des objets et/ou qui contient statiquement des objets et permet également d'appeler leurs méthodes avec les paramètres d'appel,
c) dans lequel un programme de test est généré qui contient comme composant un interprète de commande qui interprète les commandes de test introduites sur une entrée de test et qui contient comme autre composant le cadre de test généré sous b) en le traduisant et le fixant une seule fois,
d) et dans lequel le programme de test pour tester la classe est utilisé en ce que les commandes de test introduites sont interprétées par l'interprète de commande qui y est contenu de sorte que des scénarios de test différents n'exigent pas une traduction ni une fixation renouvelée.

2. Procédé selon la revendication 1, dans lequel l'information de méthodes est obtenue au moins pour toutes les méthodes exportées par l'intermédiaire d'une interface de méthodes externes, de chaque classe isolée, individuellement ou en commun.

3. Procédé selon l'une des revendications 1 ou 2 dans lequel le cadre de test contient et/ou utilise une mémoire de variables.

4. Procédé selon la revendication 3 dans lequel on accède à la mémoire de variables par pointeur.

5. Procédé selon la revendication 1 dans lequel l'interprète de commande utilise au moins un débogueur existant sur l'ordinateur.
